# EUROPÄISCHE PATENTSCHRIFT

(11) **EP 0 869 035 B1**
(45) Veröffentlichungstag und Bekanntmachung des Hinweises auf die Patenterteilung: **01.09.1999**
(21) Anmeldenummer: 97120042.3
(22) Anmeldetag: 15.11.1997
(51) Int. Cl.: B60R 9/058

(54) **Dachreling für Fahrzeuge**
Roof rail for vehicles
Rail de toit pour véhicules

(30) Priorität: 03.04.1997 DE 19713781
(43) Veröffentlichungstag der Anmeldung: 07.10.1998
(73) Patentinhaber: JAC Products Deutschland GmbH, 42285 Wuppertal (DE)
(72) Erfinder: Lumpe, Karl-Heinz, 45549 Sprockhövel (DE); Evels, Brigitte, 42119 Wuppertal (DE)

(56) Entgegenhaltungen:
- WO-A-93/20601
- DE-A- 4 321 537

## Beschreibung

Die Erfindung bezieht sich auf eine Dachreling für Fahrzeuge mit einem von Stützfüßen getragenen Holm und mit einer jedem Stützfuß zugeordneten Befestigungseinrichtung zur Befestigungsanordnung an einem sieh unter der Dachhaut des Fahrzeugs erstreckenden Spriegel oder einer sonstigen Tragestruktur.

Bekannte Befestigungseinrichtungen für Dachrelings bestehen (vgl. z. B. DE-A-40 04 829 oder DE-A-43 21 537) üblicherweise aus Schraubverbindungen mit an den Stützfüßen angeordneten Gewindebolzen und darauf unter Verspannung am Spriegel aufschraubbare Gewindemuttern. Diese Befestigungsart wird von der Abnehmerschaft von Dachrelings als arbeitsintensiv und umständlich empfunden.

Aufgabe der vorliegenden Erfindung ist es daher, eine Dachreling der eingangs genannten Art zur Verfügung zu stellen, die sich mit wesentlich wenigerem Arbeits- und Zeitaufwand montieren läßt.

Zur Lösung dieser Aufgabe ist erfindungsgemäß vorgesehen, daß die Befestigungseinrichtung einen am Stützfuß angeordneten, eine Öffnung in der Dachhaut und eine Öffnung im Spriegel durchsetzenden Bolzen mit einem abgerundeten Kopfstück sowie mit einer als Ringnut ausgeführten Hinterschneidung und in die Hinterschneidung einschnappbare, am Spriegel angeordnete Sperrelemente aufweist und daß die Sperrelemente aus zwei am Spriegel durch Führungseinrichtungen gehaltene Schieberplatten, die an ihren axial aneinandergrenzenden Stirnenden halbkreisförmige Ausnehmungen zum Eingreifen in die Ringnut des Bolzens aufweisen und miteinander über sie gegeneinander zwingende Zugfedern verbunden sind.

Durch die erfindungsgemäßen Maßnahmen wird eine überaus schnell und einfach zu bewerkstelligende Dachrelingmontage ermöglicht, die lediglich ein Aufsetzen der Dachreling auf die Dachhaut und ein Einstecken der Bolzen der Stützfüße in die hierfür vorgesehenen Öffnungen verlangt. Die erforderliche Verriegelung erfolgt durch die in die Hinterschneidungen einschnappbaren Sperrelemente dann automatisch. Die Schieberplatten können äußerst einfache Bauteile, wie Blechstanzteile sein, die sich mit sehr geringen Kosten herstellen lassen, insbesondere auch mit ausgestellten Materialzungen zum Einhängen der Zugfedern.

Die Erfindung bietet nicht nur den Vorteil einer beträchtlichen Arbeits-und Zeiteinsparung, sondern ermöglicht auch eine von der Käuferschaft schon seit langem geforderte Montage am fertigen Fahrzeug als zuletzt zu montierendes Bauteil. Die Erfindung kann auch mit Vorteil bei der Montage von Universalbügeln nach DIN 75 302 zur formschlüssigen und rutschfesten Verbindung eingesetzt werden.

Die Führungseinrichtungen für die Schieberplatten sind zweckmäßigerweise aus langlöchern in den Schieberplatten und diese sowie Bohrungen im Spriegel durchsetzende Nietbolzen gebildet. Damit kann eine Führungs- und gleichzeitig auch Befestigungseinrichtung für eine Schieberplatte aus lediglich einem Nietbolzen bestehen.

Im Bestreben darauf, der Abnehmerschaft einen geringstmöglichen Montageaufwand zuzumuten, kann eine Ausgestaltung der Erfindung darin bestehen, daß die Schieberplatten, Führungseinrichtungen und Zugfedern in einem am Spriegel zu befestigenden Gehäuse angeordnet sind. Ein solches Gehäuse mit darin montierten Elementen kann schnell und einfach am Spriegel mittels Nieten oder Punktschweißen befestigt werden.

Gemäß einer Weiterbildung der Erfindung ist die als Ringnut ausgebildete Hinterschneidung durch eine stufenförmige Absetzung am Kopfstück und einer auf einem im Durchmesser verkleinerten Axialbereich des Bolzens axial verschiebbar angeordneten und durch eine Druckfeder belasteten Scheibe gebildet. Durch die federbelastete Scheibe werden die Schieberplatten in Position gehalten, so daß sie nicht verkanten können. Auch sorgt die Scheibe für einen Ausgleich von Fertigungstoleranzen.

Zweckmäßigerweise ist dabei der Bolzen zweiteilig, wobei der erste Teil einstückig und materialeinheitlich mit dem Stützfuß und der zweite Teil als eine mit Bolzenkopf und Gewindeschaft versehene Schraube ausgebildet ist, für deren schraubgemäße Aufnahme der erste Teil eine Gewindebohrung aufweist.

Ein Ausführungsbeispiel der Erfindung wird im folgenden anhand der Zeichnung näher erläutert, und es zeigen:
- Fig. 1: eine Dachreling mit Stützfüßen und Holmen,
- Fig. 2: einen Längsschnitt durch einen der Stützfüße mit Befestigungseinrichtung und
- Fig. 3: einen Schnitt etwa folgend der Linie III - III nach Fig. 2.

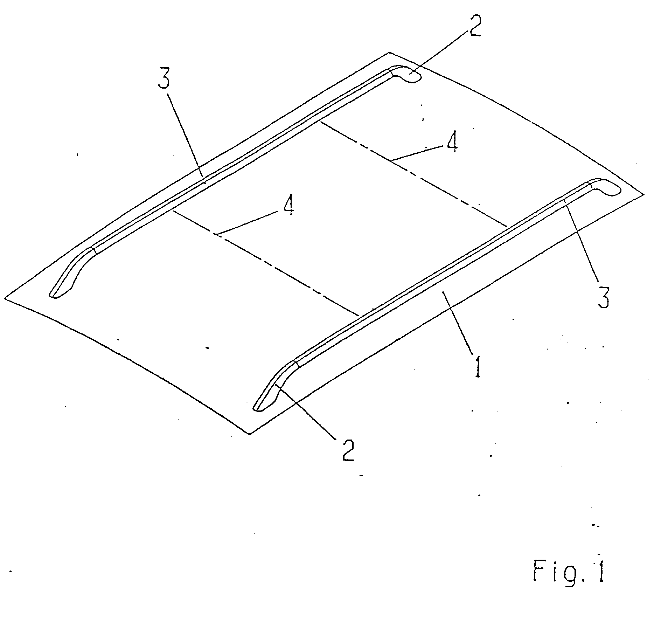

Fig. 1 läßt die Dachhaut 1 eines Fahrzeugs mit einem darauf angeordneten Dachlastenträger erkennen. Der Dachlastenträger wird aus zwei Dachrelings, bestehend aus Stützfüßen 2 und Holmen 3 sowie aus lediglich strichpunktiert angeordneten Querträgem 4, die an den Holmen befestigt sind, gebildet. Die Dachrelings erstrecken sich zumindest annähernd parallel zueinander und verlaufen in Fahrtrichtung des Fahrzeugs.

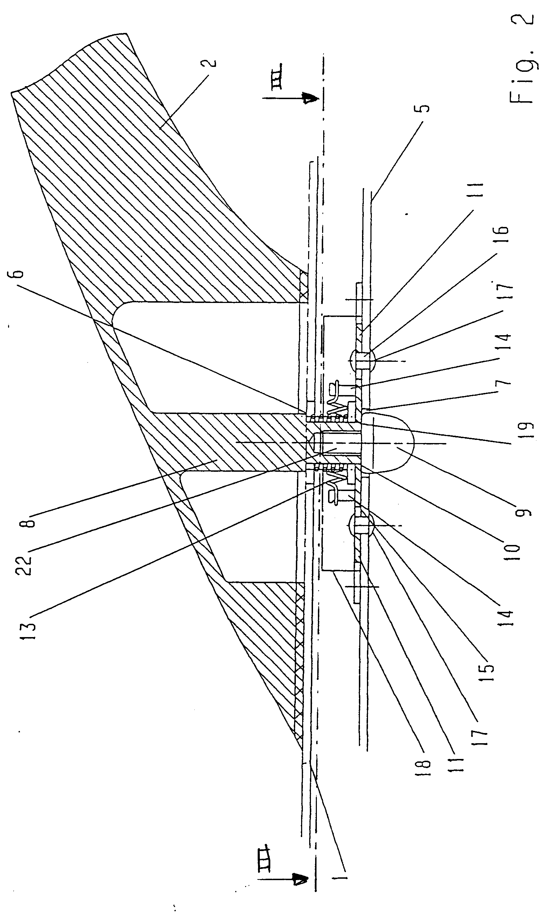

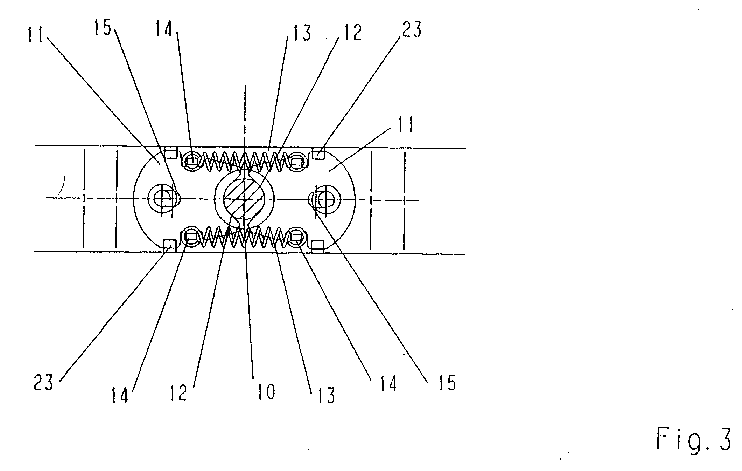

Jeder Stützfuß 2 ist mit einer aus Fig. 2 und 3 ersichtlichen Befestigungseinrichtung zur Befestigungsanordnung an einem sich unter der Dachhaut 1 erstreckenden Spriegel 5 ausgebildet. Die Befestigungseinrichtung besteht aus einem am Stützfuß 2 angeordneten, eine Öffnung 6 in der Dachhaut 1 und eine Öffnung 7 im Spriegel 5 durchsetzenden Bolzen 8 mit einem angespitzten oder abgerundeten Kopfstück 9 sowie mit einer als Ringnut 10 ausgeführten Hinterschneidung und aus in die Hinterschneidung einschnappbare, am Spriegel 5 angeordnete Sperrelemente. Die Sperrelemente sind als am Spriegel 5 durch Führungseinrichtungen gehaltene Schieberplatten 11 ausgebildet, die an ihren axial aneinandergrenzenden Stirnenden halbkreisförmige Ausnehmungen 12 zum Eingreifen in die Ringnut 10 aufweisen und miteinander über sie gegeneinander zwingende Zugfedern 13 verbunden sind. Die Schieberplatten 11 sind zweckmäßigerweise Blechstanzteile mit freigeschnittenen und hochgestellten Zungen 14 zum Einhängen der Zugfederösen und mit auf der Mittellinie liegenden Langlöchern 15. Durch die Langlöcher 15 und Bohrungen 16 im Spriegel 5 sind Nietbolzen 17 geführt, die als Halte-und Führungseinrichtungen für die Schieberplatten 11 dienen. Die Schieberplatten 11 können, wie dargestellt unmittelbar am Spriegel 5 befestigt sein. Zu empfehlen ist aber eine Vormontage der Schieberplatten 11, Zugfedern 13 und Nietbolzen 17 in einem lediglich strichpunktiert angedeuteten Gehäusekasten 18, der dann seinerseits am Spriegel 5 zu befestigen ist.

Beim Einstecken des Bolzens 8 werden die Schieberplatten 11 gegen die Kraft der Zugfedern 13 auseinanderbewegt, um in die Hinterschneidung des Bolzens 8 einzuschnappen, sobald dieser in einer Höhe mit den Schieberplatten 11 liegt.

Wie aus Fig. 2 ersichtlich ist, wird die als Ringnut 10 ausgebildete Hinterschneidung durch eine stufenförmige Absetzung 19 am Kopfstück 9 und einer auf einem im Durchmesser verkleinerten Axialbereich des Bolzens 8 axial verschiebbar angeordnete und durch eine Druckfeder 20 belastete Scheibe 21 gebildet. Dabei ist der Bolzen 8 zweiteilig, wobei der erste Teil einstückig und materialeinheitlich mit dem Stützfuß 2 und der zweite Teil als eine mit Bolzenkopf 9 und Gewindeschaft 22 versehene Schraube ausgebildet ist.

Die vorerwähnte Verwendung eines Gehäusekastens 18 bietet die vorteilhafte Möglichkeit, diesen mit freigeschnittenen und abgebogenen Zungen 23 auszubilden, die die Schieberplatten 11 anstelle der Scheibe 21 in Position halten, so daß sie nicht verkanten können.

## Patentansprüche

1. Dachreling für Fahrzeuge mit einem von Stützfüßen (2) getragenen Holm (3) und mit einer jedem Stützfuß (2) zugeordneten Befestigungseinrichtung zur Befestigungsanordnung an einem sich unter der Dachhaut (1) des Fahrzeugs erstreckenden Spriegel (5) oder dgl., dadurch gekennzeichnet, daß die Befestigungseinrichtung einen am Stützfuß (2) angeordneten, eine Öffnung (6) in der Dachhaut (1) und eine Öffnung (7) im Spriegel (5) durchsetzenden Bolzen (8) mit einem abgerundeten Kopfstück (9) sowie mit einer als Ringnut (10) ausgeführten Hinterschneidung und in die Hinterschneidung einschnappbare, am Spriegel (5) angeordnete Sperrelemente aufweist und daß die Sperrelemente aus zwei am Spriegel (5) durch Führungseinrichtungen gehaltene Schieberplatten (11) bestehen, die an ihren axial aneinandergrenzenden Stirnenden halbkreisförmige Ausnehmungen (12) zum Eingreifen in die Ringnut (10) des Bolzens (8) aufweisen und miteinander über sie gegeneinander zwingende Zugfedern (13) verbunden sind.

2. Dachreling nach Anspruch 1, dadurch gekennzeichnet, daß die Führungseinrichtungen aus Langlöchern (15) in den Schieberplatten (11) und diese sowie Bohrungen (16) im Spriegel (5) durchsetzende Nietbolzen (17) gebildet sind.

3. Dachreling nach Anspruch 1 oder 2, dadurch gekennzeichnet, daß die Schieberplatten (11), Führungseinrichtungen und Zugfedern (13) in einem am Spriegel (5) zu befestigenden Gehäuse (18) angeordnet sind.

4. Dachreling nach wenigstens einem der Ansprüche 1 bis 3, dadurch gekennzeichnet, daß die als Ringnut (10) ausgebildete Hinterschneidung durch eine stufenförmige Absetzung (19) am Kopfstück (9) und einer auf einem im Durchmesser verkleinerten Axialbereich des Bolzens (8) axial verschiebbar angeordneten und durch eine Druckfeder (20) belasteten Scheibe (21) gebildet ist.

5. Dachreling nach wenigstens einem der Ansprüche 1 bis 4, dadurch gekennzeichnet, daß der Bolzen (8) zweiteilig ist, wobei der erste Teil einstückig und materialeinheitlich mit dem Stützfuß (2) und der zweite Teil als eine mit Kopfstück (9) und Gewindeschaft (22) versehene Schraube ausgebildet ist, für deren schraubgemäße Aufnahme der erste Teil eine Gewindebohrung aufweist.

## Claims

1. Roof rail for vehicles, having a strut (3) which is supported by supporting feet (2) and having a fastening device which is assigned to each supporting foot (2) and is intended for fastening it to a frame strut (5) or the like extending under the roof skin (1) of the vehicle, characterized in that the fastening device has a bolt (8) which is arranged on the supporting foot (2), passes through an opening (6) in the roof skin (1) and an opening (7) in the frame strut (5) and has a rounded headpiece (9) and also an undercut, which is designed as an annular groove (10), and the fastening device furthermore has locking elements which can be snapped into the undercut and are arranged on the frame strut (5), and in that the locking elements comprise two slider plates (11) which are held on the frame strut (5) by guide devices, have semicircular recesses (12) on their axially adjacent ends for engaging into the annular groove (10) of the bolt (8) and are connected to each other via tension springs (13) forcing them towards each other.

2. Roof rail according to Claim 1, characterized in that the guide devices are formed from elongated holes (15) in the slider plates (11) and rivet bolts (17) passing through said elongated holes and also through holes (16) in the frame strut (5).

3. Roof rail according to Claim 1 or 2, characterized in that the slider plates (11), guide devices and tension springs (13) are arranged in a housing (18) which can be fastened to the frame strut (5).

4. Roof rail according to at least one of Claims 1 to 3, characterized in that the undercut, which is designed as a annular groove (10), is formed by a step-shaped offset (19) on the headpiece (9) and a washer (21) which is arranged such that it can be displaced axially on a diameter-reduced axial region of the bolt (9) and is stressed by a compression spring (20).

5. Roof rail according to at least one of Claims 1 to 4, characterized in that the bolt (8) has two parts, the first part being designed such that it is integral with, and is of the same material as, the supporting foot (2) and the second part being designed as a screw which is provided with a headpiece (9) and a threaded shank (22), and the first part has a threaded hole for said screw to be screwed into.

## Revendications

1. Rail de toit pour véhicules comportant un longeron (3) porté par des pieds de support (2) et un dispositif de fixation associé à chaque pied de support (2) pour réaliser une fixation sur un arceau (5) ou similaire s'étendant sous le panneau de toit (1) du véhicule, caractérisé en ce que le dispositif de fixation présente un boulon (8) disposé sur le pied de support (2), traversant une ouverture (6) dans le panneau de toit (1) et une ouverture (7) dans l'arceau (5), et muni d'une tête arrondie (9) ainsi que d'une contre-dépouille configurée sous forme de rainure annulaire (10), et des éléments de blocage disposés sur l'arceau (5), encliquetables dans la contre-dépouille, et en ce que les éléments de blocage se composent de deux plaques coulissantes (11) maintenues sur l'arceau (5) par des dispositifs de guidage, et qui présentent, à leurs extrémités d'about axialement adjacentes, des évidements semi-circulaires (12) pour l'engagement avec la rainure annulaire (10) du boulon (8), et sont reliées l'une à l'autre par des ressorts de traction (13) les serrant l'une contre l'autre.

2. Rail de toit selon la revendication 1, caractérisé en ce que les dispositifs de guidage sont constitués de trous oblongs (15) dans les plaques coulissantes (11) et de boulons rivés traversant ceux-ci ainsi que des alésages (16) dans l'arceau (5).

3. Rail de toit selon la revendication 1 ou 2, caractérisé en ce que les plaques coulissantes (11), les dispositifs de guidage et les ressorts de traction (13) sont disposés dans un boîtier (18) à fixer sur l'arceau (5).

4. Rail de toit selon au moins l'une des revendications 1 à 3, caractérisé en ce que la contre-dépouille configurée en tant que rainure annulaire (10) est formée par un retrait (19) en forme d'échelon au niveau de la tête (9) et par un disque (21) disposé de manière déplaçable axialement sur une zone axiale de diamètre réduit du boulon (8) et sollicité par un ressort de pression (20).

5. Rail de toit selon au moins l'une des revendications 1 à 4, caractérisé en ce que le boulon (8) est en deux parties, la première partie étant configurée d'une pièce avec le pied de support (2) et en le même matériau que celui-ci, et la deuxième partie étant configurée sous forme de vis pourvue d'une tête (9) et d'une tige filetée (22), qui est reçue par vissage dans la première partie qui présente pour cela un alésage fileté.
